# EUROPÄISCHE PATENTANMELDUNG

(11) **EP 3 051 459 A1**
(43) Veröffentlichungstag der Anmeldung: **03.08.2016**
(21) Anmeldenummer: 15153252.0
(22) Anmeldetag: 30.01.2015
(51) Int. Cl.: G06K 7/10, G06K 7/00

(54) **Verfahren und Lese-/Schreibvorrichtung zur Präsenzbestimmung einer Transpondereinheit**

(71) Anmelder: ASTRA Gesellschaft für Asset Management mbH & Co. KG, 30890 Barsinghausen (DE)
(72) Erfinder: Stobbe, Anatoli, 30890 Barsinghausen (DE)
(74) Vertreter: Patentanwälte Thömen & Körner

(57) **Zusammenfassung**

Verfahren zur Präsenzbestimmung einer Transpondereinheit in einem elektromagnetischen Feld einer Lese-/Schreibvorrichtung, wobei zunächst eine Kontrolleinheit aus einem Stand-by-Modus in einen Detektionsmodus verbracht wird, in welchem ein Detektionssignal ausgesandt wird. Zeitgleich und/oder anschließend wird ein Antennensignal abgegriffen, welches an eine Demodulationseinheit weitergeleitet wird, um in dieser, ausgehend von dem Antennensignal, ein Vergleichssignal zu ermitteln. Dieses Vergleichssignal wird an die Kontrolleinheit weitergeleitet und dort mit einem Referenzsignal verglichen. Weicht das Referenzsignal von dem Vergleichssignal um einen vorbestimmbaren Wert ab, so wird ein Kommunikationssignal ausgesandt. Andernfalls wird die Kontrolleinheit wieder in den Stand-by-Modus verbracht. Das Verfahren unterscheidet sich dadurch vom Stand der Technik, dass als Demodulationseinheit ein Hüllkurvendemodulator verwendet wird.

## Beschreibung

Die Erfindung betrifft ein Verfahren und eine Lese-/Schreibvorrichtung zur Präsenzbestimmung einer Transpondereinheit in einem elektromagnetischen Feld einer Lese-/Schreibvorrichtung nach dem Oberbegriff des Anspruchs 1.

RFID-Systeme (Radio Frequency Identification) zur Kommunikation einer Transpondereinheit mit einer Lese-/Schreibvorrichtung sind bereits bekannt und weit verbreitet. Solche Systeme nutzen eine elektromagnetische Kopplung zwischen einer Lese-/Schreibvorrichtung und einer Transpondereinheit, um Daten und gegebenenfalls Energie zwischen der Lese-/Schreibvorrichtung und der Transpondereinheit auszutauschen.

Dabei spielt die Entwicklung von netzunabhängigen Systemen, d.h. Lese-/Schreibvorrichtungen ohne externe Energieversorgung eine immer größere Rolle. Aus diesem Grund ist es Gegenstand der aktuellen Entwicklung stationäre und/oder mobile Lese-/Schreibvorrichtungen zu konstruieren, die einen möglichst geringen Stromverbrauch aufweisen und somit für den Batteriebetrieb geeignet sind.

Ein solches System mit dem zugrunde liegenden Verfahren ist in der WO 2005/086069 A2 beschrieben. Dieses Verfahren sieht vor, dass die Lese-/Schreibvorrichtung periodisch oder kontinuierlich ein Detektionssignal aussendet und erst, wenn eine Transpondereinheit im elektromagnetischen Feld der Lese-/Schreibvorrichtung detektiert wurde, ein Kommunikationssignal zur Identifikation und Kommunikation mit der Transpondereinheit aussendet.

Allerdings wird bei dem in der WO 2005/086069 A2 beschriebenen Verfahren das Detektionssignal mit voller Sendeleistung abgegeben und die Empfängereinheit ist während des Aussendens des Detektionssignals und dem Erfassen desselbigen kontinuierlich in Betrieb und verbraucht somit Strom. Zudem kann das beschriebene Verfahren lediglich für eine Detektions- und Kommunikationsfrequenz von 13,56 MHz eingesetzt werden.

Der vorliegenden Erfindung liegt somit die Aufgabe zugrunde, die bisherigen Nachteile und Beschränkungen zu überwinden und ein Verfahren bereitzustellen, das frequenzunabhängig einsetzbar ist und das den Stromverbrauch einer Lese-/Schreibvorrichtung, die mittels eines Radiosignals mit einer Transpondereinheit kommuniziert, minimiert.

Diese Aufgabe wird bei einem Verfahren nach dem Oberbegriff des Anspruchs 1 durch die kennzeichnenden Merkmale des Anspruchs 1 und bei einer Lese-/Schreibvorrichtung nach dem Oberbegriff des Anspruchs 14 durch die kennzeichnenden Merkmale des Anspruchs 14 gelöst. Weiterbildungen und vorteilhafte Ausgestaltungen ergeben sich aus den abhängigen Ansprüchen.

Das erfindungsgemäße Verfahren sieht neben den aus dem Stand der Technik bekannten Verfahrensschritten:
- Verbringen einer Kontrolleinheit aus einem Stand-by-Modus in einen Detektionsmodus
- Aussenden eines Detektionssignals
- Abgreifen eines Antwortsignals
- Weiterleiten des Antwortsignals an eine Demodulationseinheit
- Ermitteln eines Vergleichssignals
- Weiterleiten des Vergleichssignals an die Kontrolleinheit
- Vergleichen des Vergleichssignals mit einem Referenzsignal
- Aussenden eines Kommunikationssignals, falls das Vergleichssignal um einen vorbestimmbaren Wert vom Referenzsignal abweicht, folgendes vor:
   Als Antwortsignal wird eine an einer Antenne der Lese-/Schreibvorrichtung abgegriffene Spannung des Antennensignals gleichgerichtet und über mehrere Schwingungen analog aufsummiert und zwischengespeichert. Nach Abschalten des Detektionssignals wird der zwischengespeicherte Wert als Vergleichssignal an die Kontrolleinheit weitergeleitet und dort mit dem Referenzsignal verglichen.

Das analoge Summieren der nach Gleichrichtung erhaltenen Halbwellen der Schwingungen des Antennensignals sowie das Zwischenspeichern des summierten Wertes kann mit passiven Bauelementen durchgeführt werden, die ihre Betriebsenergie dem Antennensignal selbst entnehmen und keine zusätzliche Energie benötigen. Dadurch kann der Energieverbrauch im Detektionsmodus deutlich gegenüber dem Stand der Technik gesenkt werden, bei dem im Detektionsmodus die Lese-/Schreibvorrichtung aktiviert ist.

Die erfindungsgemäße Lösung ist nicht auf einen speziellen Frequenzbereich beschränkt und kann somit insbesondere in Lese-/Schreibvorrichtungen für die gängigen RFID Frequenzbereiche im niederfrequenten (LF) Bereich zwischen 50 kHz und 200 kHz und/oder im hochfrequenten (HF) Bereich zwischen 10 MHz und 15 MHz, insbesondere für Frequenzen von 125 kHz und/oder von 13,56 MHz eingesetzt werden.

Da die Auswertung des gespeicherten Wertes erst nach Abschalten des Detektionssignals erfolgt, wird der Energiebedarf während des gesamten Detektionszyklusses auf einem sehr niedrigen Niveau gehalten.

Das ermittelte Vergleichssignal wird über einen A/D-Wandler an eine Kontrolleinheit weitergeleitet und dort mit einem Referenzsignal verglichen.

Das Verfahren sieht vor, die Kontrolleinheit je nach Situation in verschiedene Betriebsmodi zu verbringen. So befindet sich die Kontrolleinheit einen Großteil der Zeit in einem Stand-by-Modus aus dem die Kontrolleinheit periodisch in einen Detektionsmodus verbracht wird. Falls sich keine Transpondereinheit im elektromagnetischen Feld der Lese-/Schreibvorrichtung befindet, wird die Kontrolleinheit zurück in den Stand-by-Modus verbracht. Andernfalls wird die Kontrolleinheit in einen Kommunikationsmodus verbracht, aus dem die Kontrolleinheit in den Stand-by-Modus zurück verbracht wird, sobald die Kommunikation abgeschlossen ist.

Es ist vorteilhaft, wenn die Kontrolleinheit erst in den Kommunikationsmodus verbracht wird, wenn ein Vergleichssignal um einen vorbestimmbaren Wert von einem Referenzsignal abweicht. Somit ist es möglich ein Verbringen der Kontrolleinheit in den Kommunikationsmodus zu vermeiden, wenn sich keine Transpondereinheit im elektromagnetischen Feld der Lese-/Schreibvorrichtung befindet.

Es ist für die Anwendung des Verfahrens zweckmäßig, wenn das Verbringen der Kontrolleinheit von dem Stand-by-Modus in den Detektionsmodus sich periodisch wiederholt, wobei die Periode einstellbar ist und insbesondere 250 ms betragen kann. Im Stand-by-Modus verbraucht die Lese-/Schreibvorrichtung am wenigsten Strom. Somit ist es vorteilhaft sie möglichst oft und/oder möglichst lange in diesem Modus verweilen zu lassen.

Es ist vorteilhaft, wenn das Referenzsignal automatisch neu kalibriert wird. Für eine automatische Kalibrierung des Referenzsignals kann das Vergleichssignal, welches an die Kontrolleinheit übermittelt wurde, herangezogen werden. Dabei kann die Kalibrierung des Referenzsignals auf dem letzten Vergleichssignal oder auf den letzten bis zu 100 Vergleichssignalen beruhen. Durch eine solche automatische Kalibrierung kann sich die Lese-/Schreibvorrichtung an eine mögliche Änderung der äußeren Bedingungen, die die Abstrahlcharakteristik der Lese-/Schreibvorrichtung verändern, anpassen.

Es ist zweckmäßig, wenn es sich bei dem Detektionssignal um einen einzigen Impuls von 2 µs Länge handelt oder um mindestens zwei Impulse mit einer Frequenz von 125 kHz.

Hierzu ist es vorteilhaft, wenn das Detektionssignal direkt über den Timer-Ausgang der Kontrolleinheit erzeugt wird.

Vorzugsweise wird im LF-Frequenzbereich, in den 125 kHz fällt, unmittelbar nach Aussenden des Impulses und für einen Zeitraum, der gleich dem Zeitraum zum Aufsummieren des Vergleichssignals bis zu einem Maximalwert entspricht, die Lese-/Schreibvorrichtung vorübergehend in den Stand-by-Modus versetzt. Nach Ablauf dieses Zeitraums wird die Lese-/Schreibvorrichtung wieder in den Detektionsmodus versetzt und der Wert des Vergleichssignals verarbeitet. Mit dem Impuls wird der Schwingkreis der Antenne angeregt und baut dann eine Schwingung auf, die anschließend wieder abklingt. Die Demodulationseinheit summiert daher auch nach Ende des den Schwingkreis anregenden Impulses noch weitere Schwingungen auf, bis ein Maximum der gleichgerichteten und aufsummierten Schwingungen erreicht ist und dieser Wert zwischengespeichert wird.

Es kann vorteilhaft sein, dass die Lese-/Schreibvorrichtung einen Reihenwiderstand zwischen Antenne und Demodulationseinheit umfasst, der verhindert, dass die ersten Impulse der Antennenschwingung mit voller Amplitude in das Vergleichssignal eingehen und dass die Demodulationseinheit den Schwingkreis der Antenne unzulässig belastet.

Es kann zweckmäßig sein, dass der Zeitraum, in dem die Schwingungen aufsummiert werden, zuvor berechnet oder in Vorversuchen empirisch ermittelt werden kann. Da innerhalb dieses Zeitraums nur passive Bauelemente an der Detektion beteiligt sind, kann die Kontrolleinheit vorübergehend in den Stand-by-Modus geschaltet werden, und so der Energiebedarf nochmals gesenkt werden. Im Stand-by-Modus ist nämlich im Idealfall nur noch eine interne Uhr aktiv, die die Kontrolleinheit zu festgelegten Zeiten aus dem Stand-by-Modus wecken kann und im Stand-by-Modus nur extrem wenig Energie benötigt.

Weiter kann es zweckmäßig sein, wenn es sich bei dem Detektionssignal um wenigstens einen Burst handelt und der Burst 40-100 Impulse, bevorzugt 60-80 Impulse umfasst.

Es ist von Vorteil, wenn zur Erzeugung des Detektionssignals ein externer Oszillator eingesetzt wird, der ausschließlich diesem Zweck dient und besonders energiesparend ausgeführt wird.

Ferner ist es zweckmäßig, das Detektionssignal mit einer geringeren Leistung auszusenden, als das Kommunikationssignal. Dadurch kann der Stromverbrauch der Lese-/Schreibvorrichtung weiter verringert werden.

Vorzugsweise wird zur Aussendung des Detektionssignals ein hochohmiger Verstärker eingesetzt. Dadurch kann der Stromverbrauch im Detektionsmodus weiter verringert werden.

Vorzugsweise wird im HF-Frequenzbereich, in den 13,56 MHz fällt, zu Beginn des Detektionsmodus der externe Oszillator eingeschaltet, unmittelbar nach Einschalten des externen Oszillators und für einen Zeitraum, der gleich dem Zeitraum zum Einschwingen und Erreichen eines stationären Zustand der Schwingungsamplitude ist, wird die Kontrolleinheit vorübergehend in den Stand-by-Modus versetzt. Nach Ablauf dieses Zeitraums wird die Kontrolleinheit wieder in den Detektionsmodus versetzt, anschließend der Verstärker aktiviert und die Oszillatorschwingung für die Dauer des Burst auf die Antenne geschaltet und danach wieder von der Antenne getrennt und gleichzeitig wird der Verstärker und der Oszillator ausgeschaltet. Unmittelbar danach wird der Wert des Vergleichssignals verarbeitet.

Während des Bursts bauen sich am Schwingkreis der Antenne Schwingungen mit zunehmender Amplitude auf, die nach dem Burst wieder abklingen. Die Demodulationseinheit summiert während des Bursts die Spannungsspitzen der gleichgerichteten Schwingungen auf, bis zum Ende des Bursts ein Maximum erreicht und dieser Wert zwischengespeichert wird. Da innerhalb des Zeitraums des Bursts nur der externe Oszillator und der Verstärker aktiv sind und sonst nur passive Bauelemente an der Detektion beteiligt sind, kann die Kontrolieinheit vorübergehend in den Stand-by-Modus geschaltet werden, und so der Energiebedarf nochmals gesenkt werden. Im Stand-by-Modus ist nämlich im Idealfall nur noch eine interne Uhr aktiv, die die Kontrolleinheit zu festgelegten Zeiten aus dem Stand-by-Modus wecken kann und im Stand-by-Modus nur extrem wenig Energie benötigt.

Es kann vorteilhaft sein, dass die Lese-/Schreibvorrichtung einen Reihenwiderstand zwischen Antenne und Demodulationseinheit umfasst, der verhindert, dass die ersten Impulse der Antennenschwingung mit voller Amplitude in das Vergleichssignal eingehen und dass die Demodulationseinheit den Schwingkreis der Antenne unzulässig belastet.

Eine weitere vorteilhafte Ausgestaltung sieht vor, dass bei einem kombiniert für den HF- und den LF-Frequenzbereich ausgelegten Lese-/Schreibgerät zunächst ein erstes Detektionssignal in einem der beiden Frequenzbereiche ausgesandt wird und dass nach dem Vergleich des Vergleichssignals mit dem Referenzsignal im einen Fall, dass das Vergleichssignal um einen vorbestimmbaren Wert vom Referenzsignal abweicht, die Kontrolleinheit in den Kommunikationsmodus verbracht wird oder im anderen Fall, dass das Vergleichssignal nicht um einen vorbestimmbaren Wert vom Referenzsignal abweicht, ein zweites Detektionssignal in dem anderen der beiden Frequenzbereiche ausgesandt wird und dass nach dem Vergleich des Vergleichssignals mit dem Referenzsignal im einen Fall, dass das Vergleichssignal um einen vorbestimmbaren Wert vom Referenzsignal abweicht, die Kontrolleinheit in den Kommunikationsmodus verbracht wird oder im anderen Fall, dass das Vergleichssignal nicht um einen vorbestimmbaren Wert vom Referenzsignal abweicht, in den Stand-by-Modus verbracht wird.

Dabei ist es unerheblich, ob zunächst das Detektionssignal mit einer Frequenz im LF-Frequenzbereich ausgesandt wird und anschließend das mit einer Frequenz im HF-Frequenzbereich oder umgekehrt.

Somit ist es möglich mehrere Transpondereinheiten, die auf unterschiedlichen Frequenzbereichen kommunizieren mit lediglich einer Lese-/Schreibvorrichtung zu detektieren und Daten zwischen der Lese-/Schreibvorrichtung und der Transpondereinheit auszutauschen.

Neben dem Verfahren umfasst die Erfindung eine Lese-/Schreibvorrichtung zur Durchführung des erfindungsgemäßen Verfahrens.

Dabei umfasst die Demodulationseinheit eine Diode, einen Kondensator und einen parallel zum Kondensator liegenden Widerstand, wobei der Kondensator gleichzeitig ein Zwischenspeicher ist.

Es kann vorteilhaft sein, dass die Lese-/Schreibvorrichtung einen Widerstand zwischen Antenne und Demodulationseinheit umfasst.

Im Folgenden wird die Erfindung anhand von Figuren und der in den Zeichnungen dargestellten Ausführungsbeispielen näher erläutert. Dabei zeigt:
- Fig. 1: eine schematische Darstellung des Verfahrens für den Einsatz in einer Lese-/Schreibvorrichtung mit einer Frequenz von 13,56 MHz des Detektions- und Kommunikationssignals.
- Fig. 2: einen zeitlichen Verlauf der Detektionssignale für einen HF-Frequenzbereich (Fig. 2a) und einen LF-Frequenzbereich (Fig. 2b).
- Fig.3: einen zeitlichen Verlauf der Antennenschwingung ohne (Fig. 3a) und mit (Fig. 3b) Transpondereinheit im elektromagnetischen Feld für einen HF-Frequenzbereich.
- Fig. 4: eine schematische Darstellung des Verfahrens für den Einsatz in einer Lese-/Schreibvorrichtung mit einer Frequenz von 125 kHz des Detektions- und Kommunikationssignals.
- Fig. 5: einen zeitlichen Verlauf der Antennenschwingung ohne (Fig. 5a) und mit (Fig. 5b) Transpondereinheit im elektromagnetischen Feld für einen LF-Frequenzbereich.
- Fig. 6: einen zeitlichen Verlauf der Kondensatorspannung im Hüllkurvendemodulator.
- Fig.7: eine schematische Darstellung des Verfahrens für den Einsatz in einer Lese-/Schreibvorrichtung mit Frequenzen von 125 kHz und 13,56 MHz des Detektions- und Kommunikationssignals.

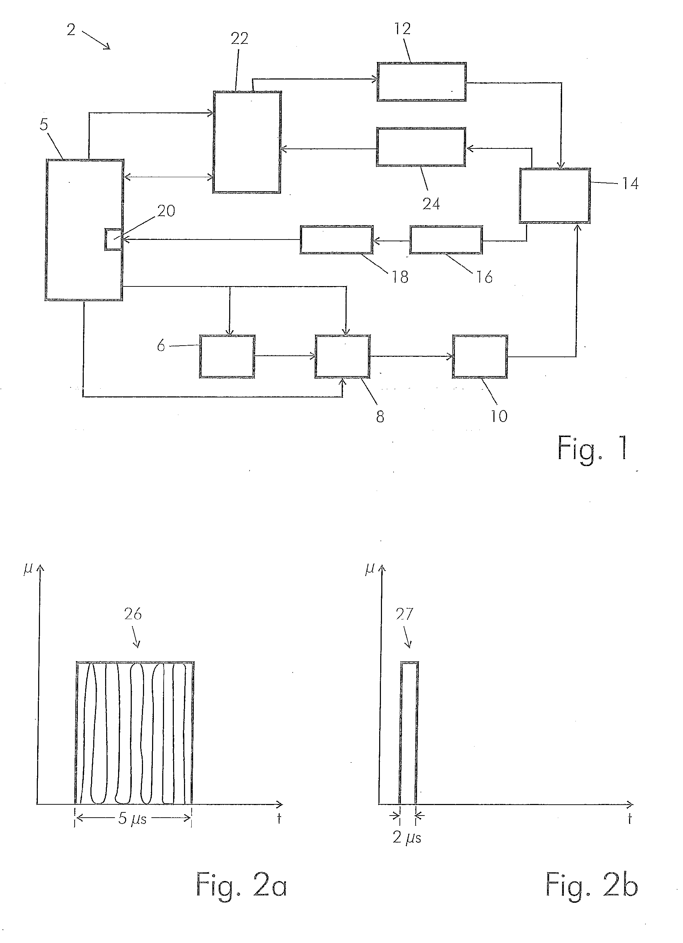

In Figur 1 ist eine schematische Darstellung des Verfahrens für den Einsatz in einer Lese-/Schreibvorrichtung 2 mit einer Frequenz von 13,56 MHz des Detektions- und Kommunikationssignals dargestellt.

Zu Beginn eines Detektionszyklusses befindet sich die Lese-/Schreibvorrichtung 2 in einem Stand-by-Modus in dem lediglich die Teile einer Kontrolleinheit 5 aktiv sind, die für die periodische Verbringung der Lese-/Schreibvorrichtung 2 in einen Detektionsmodus benötigt werden.

Die periodische Verbringung in den Detektionsmodus der Lese-/Schreibvorrichtung 2 ist dabei individuell in der Kontrolleinheit 5 einstellbar. Eine vorteilhafte Ausgestaltung der Erfindung sieht einen Wechsel von Stand-by- in den Detektionsmodus alle 250 ms vor.

Im Detektionsmodus wird zunächst der Oszillator 6 und verzögert der Verstärker 8 durch die Kontrolleinheit 5 eingeschaltet und ein Detektionssignal über eine Anpassung 10 an eine Antenne 14 geleitet.

Das Antennensignal der Antenne 14 wird direkt abgegriffen und über einen Widerstand 16 einer Demodulationseinheit 18 zugeführt. Die Demodulationseinheit 18 beinhaltet einen Hüllkurvendemodulator, der eine Diode, einen Kondensator und einen parallel zum Kondensator liegenden Widerstand umfasst. Das Antennensignal der Antenne 14 wird im Hüllkurvendemodulator aufsummiert und der Wert kurzzeitig gespeichert.

Eine entsprechende Verarbeitung des gespeicherten Wertes beginnt erst dann, wenn das Detektionssignal bereits wieder abgeschaltet wurde. Dadurch wird das benötigte Energieniveau stets niedrig gehalten.

Das so gewonnene Vergleichssignal wird an einen A/D-Wandler 20 der Kontrolleinheit 5 weitergeleitet, in der das Vergleichssignal mit einem Referenzsignal verglichen wird. Stimmt das Vergleichssignal bis auf eine definierbare Toleranzabweichung mit dem Referenzsignal überein, so befindet sich keine Transpondereinheit im elektromagnetischen Feld der Lese/Schreibvorrichtung 2 und die Kontrolleinheit 5 wird in den Stand-by-Modus verbracht.

Sollte das Vergleichssignal jedoch außerhalb des Toleranzbereiches liegen, so wechselt die Kontrolleinheit 5 in einen Kommunikationsmodus, indem eine Transceivereinheit 22 eingeschaltet wird. Die Transceivereinheit 22 sendet daraufhin das Kommunikationssignal über eine Anpassung 12 an die Antenne 14, welche wiederum die Antwort der Transpondereinheit empfängt und über einen Filter 24 an die Transceivereinheit 22 leitet. Während der Kommunikation zwischen Kontrolleinheit 5 und Transpondereinheit werden, im für die Kommunikation benötigten Ausmaß, Daten zwischen Kontrolleinheit 5 und Transceivereinheit 22 ausgetauscht.

Nach einer abgeschlossenen Kommunikation wird die Transceivereinheit 22 abgeschaltet und die Kontrolleinheit 5 wieder in den Stand-by-Modus verbracht, aus dem sie erneut periodisch in den Detektionsmodus verbracht wird.

In Figur 2 ist der zeitliche Verlauf eines Detektionssignals 26, 27, wie es an die Antenne gesandt wird, dargestellt. Dabei zeigt Figur 2a einen mehrere Einzelschwingungen umfassenden Burst von 5 µs Länge, wie er beispielsweise bei der Detektion im HF-Frequenzbereich eingesetzt werden kann. Dagegen zeigt Figur 2b einen einzelnen Impuls von 2 µs Länge, wie er beispielsweise bei der Detektion im LF-Frequenzbereich eingesetzt werden kann.

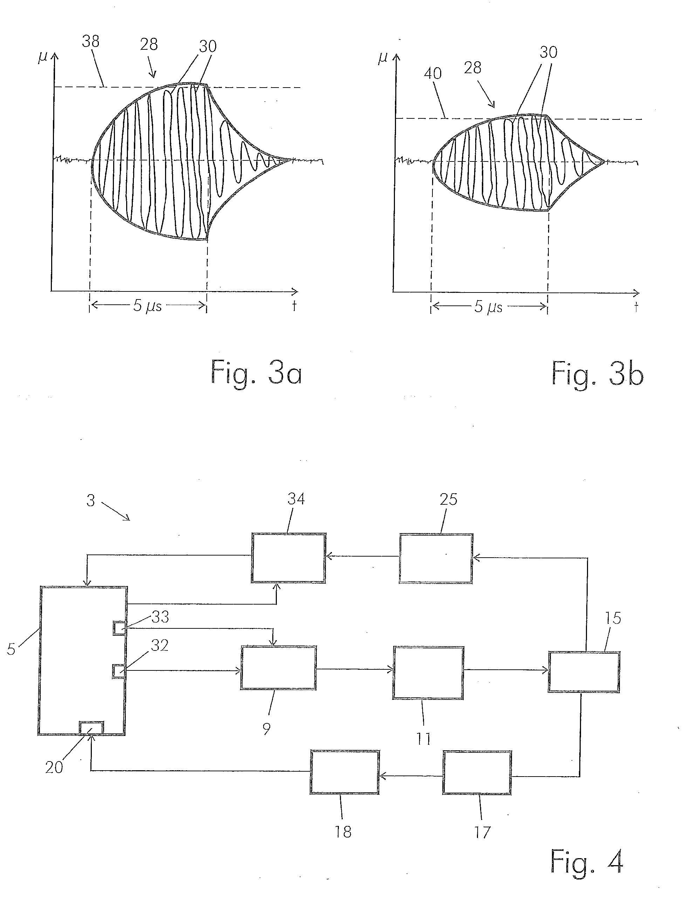

In Figur 3 ist ein typischer zeitlicher Verlauf des Antennensignals 28 dargestellt. Aufgrund des ausgesandten Detektionssignals in Form eines 5 µs Bursts wird die Antenne zu Schwingungen 30 angeregt und schwingt nach Abschalten des Detektionssignals langsam aus. Die Antennenschwingung 30 wird über einen Widerstand an den Hüllkurvendemodulator weitergeleitet.

Befindet sich eine Transpondereinheit im elektromagnetischen Feld der Lese-/Schreibvorrichtung (Fig. 3b), so wird die Antenne bedämpft und die Amplitude der Antennenschwingungen 30 erreicht nicht die Werte wie im ungedämpften Fall, wenn sich keine Transpondereinheit im elektromagnetischen Feld der Lese-/Schreibvorrichtung befindet (Fig. 3a).

Die Folge davon ist, dass die energetische Ladung des Kondensators des Hüllkurvendemodulators und das daraus gewonnene Vergleichssignal 40 geringer (Fig. 3b) ist, als für den Fall, dass sich keine Transpondereinheit im elektromagnetischen Feld der Lese-/Schreibvorrichtung befindet und somit das Vergleichssignal 40 bis auf eine Toleranzabweichung dem Referenzsignal 38 entspricht (Fig. 3a).

In Figur 4 ist eine schematische Darstellung des Verfahrens für den Einsatz in einer Lese-/Schreibvorrichtung 3 mit einer Frequenz von 125 kHz des Detektions- und Kommunikationssignals dargestellt.

Zu Beginn eines Detektionszyklusses befindet sich die Lese-/Schreibvorrichtung 3 in einem Stand-by-Modus in dem lediglich die Teile einer Kontrolleinheit 5 aktiv sind, die für die periodische Verbringung der Lese-/Schreibvorrichtung 3 in einen Detektionsmodus benötigt werden.

Die periodische Verbringung in den Detektionsmodus der Lese-/Schreibvorrichtung 3 ist dabei individuell in der Kontrolleinheit 5 einstellbar. Eine vorteilhafte Ausgestaltung der Erfindung sieht einen Wechsel von Stand-by- in den Detektionsmodus alle 250 ms vor.

Im Detektionsmodus generiert die Kontrolleinheit 5 ein Detektionssignal in Form eines einzelnen 2µs Pulses, der mittels eines Timer-Ausgangs 32 der Kontrolleinheit 5 über eine Verstärkereinheit 9 und eine Anpassung 11 an eine Antenne 15 geleitet wird. Der Puls regt die Antenne 15 zum Schwingen an, die daraufhin anschwingt und mit ihrer Resonanzfrequenz langsam wieder ausschwingt.

Das Antennensignal der Antenne 15 wird direkt abgegriffen und über einen Widerstand 17 einer Demodulationseinheit 18 zugeführt. Die Demodulationseinheit 18 beinhaltet einen Hüllkurvendemodulator, der eine Diode, einen Kondensator und einen parallel zum Kondensator liegenden Widerstand umfasst. Das Antennensignal der Antenne 15 wird im Hüllkurvendemodulator aufsummiert und kurzzeitig gespeichert.

Eine entsprechende Verarbeitung des gespeicherten Wertes beginnt erst dann, wenn das Detektionssignal bereits wieder abgeschaltet wurde. Somit wird das benötigte Energieniveau stets niedrig gehalten.

Das so gewonnene Vergleichssignal wird an einen A/D-Wandler 20 der Kontrolleinheit 5 weitergeleitet, in der das Vergleichssignal mit einem Referenzsignal verglichen wird. Stimmt das Vergleichssignal bis auf eine definierbare Toleranzabweichung mit dem Referenzsignal überein, so befindet sich keine Transpondereinheit im elektromagnetischen Feld der Lese-/Schreibvorrichtung 3 und die Kontrolleinheit 5 wird in den Stand-by-Modus verbracht.

Sollte das Vergleichssignal jedoch außerhalb des Toleranzbereiches liegen, so wechselt die Kontrolleinheit 5 in einen Kommunikationsmodus. Im Kommunikationsmodus wird über die Verstärkereinheit 9 und die Anpassung 11 das Kommunikationssignal, welches über einen Timer-Ausgang 33 der Kontrolleinheit 5 in der Verstärkereinheit 9 modulierbar ist, an die Antenne 15 weitergeleitet, welche wiederum die Signale der Transpondereinheit empfängt und über einen Filter 25 an eine Empfängereinheit 34 leitet. Während der Kommunikation zwischen Kontrolleinheit 5 und Transpondereinheit werden, im für die Kommunikation benötigten Ausmaß, Daten von der Empfängereinheit 34 an die Kontrolleinheit 5 weitergeleitet.

Nach einer abgeschlossenen Kommunikation wird die Kontrolleinheit 5 wieder in den Stand-by-Modus verbracht, aus dem sie erneut periodisch in den Detektionsmodus verbracht wird.

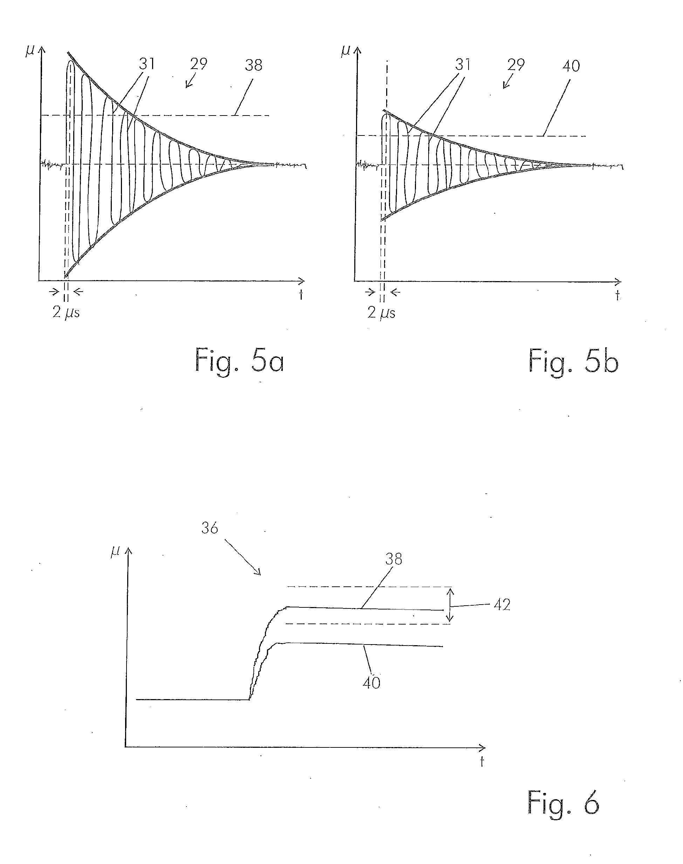

In Figur 5 ist ein typischer zeitlicher Verlauf des Antennensignals 29 dargestellt. Aufgrund des ausgesandten Detektionssignals in Form eines 2 µs Impulses wird die Antenne zu Schwingungen angeregt und schwingt nach Abschalten des Detektionssignals langsam aus. Die Antennenschwingung 31 wird über einen Widerstand an den Hüllkurvendemodulator weitergeleitet.

Befindet sich eine Transpondereinheit im elektromagnetischen Feld der Lese-/Schreibvorrichtung (Fig. 5b), so wird die Antenne bedämpft und die Amplitude der Antennenschwingungen 31 erreicht nicht die Werte wie im ungedämpften Fall, wenn sich keine Transpondereinheit im elektromagnetischen Feld der Lese-/Schreibvorrichtung befindet (Fig. 5a).

Die Folge davon ist, dass die energetische Ladung des Kondensators des Hüllkurvendemodulators und das daraus gewonnene Vergleichssignal 40 geringer (Fig. 5b) ist, als für den Fall, dass sich keine Transpondereinheit im elektromagnetischen Feld der Lese-/Schreibvorrichtung befindet und somit das Vergleichssignal 40 bis auf eine Toleranzabweichung dem Referenzsignal 38 entspricht (Fig. 5a).

In Figur 6 ist eine typische Spannungskennlinie 36 eines Kondensators in einem Hüllkurvendemodulator dargestellt. Mit dem Beginn der Antennenschwingungen steigt die Spannung des Kondensators am Hüllkurvendemodulator stetig an, bis sie ein Maximum erreicht, wenn das Detektionssignal entweder abgeschaltet wird oder die abfallenden Schwingungen keinen Beitrag mehr leisten.

Bei den beiden Spannungskennlinien 36 handelt es sich zum einen um ein Referenzsignal 38 und zum andern um ein Vergleichssignal 40. Zudem ist der frei wählbare Toleranzbereich 42 dargestellt und die Tatsache, dass die Abweichung des Vergleichssignals 40 außerhalb des Toleranzbereichs 42 des Referenzsignals 38 liegt und somit der Vergleich der Signale zu einer Verbringung der Kontrolleinheit in den Kommunikationsmodus führt.

Zudem ist es möglich, dass sich das Referenzsignal 38 und der Toleranzbereich 42 automatisch und/oder manuell anpassen lassen. Die Anpassung ist dabei abhängig von den Umgebungsparametern der Lese-/Schreibvorrichtung und/oder der Anzahl erfolgreicher und nicht erfolgreicher Kommunikationen mit einer Transpondereinheit.

Eine vorteilhafte Ausgestaltung könnte die Anpassung des Referenzsignals 38 und/oder des Toleranzbereiches 42 nach jedem Vergleich eines Vergleichssignals 40 mit einem Referenzsignal 38 oder nach bis zu 100 Vergleichen eines Vergleichssignals 40 mit einem Referenzsignal 38 vorsehen.

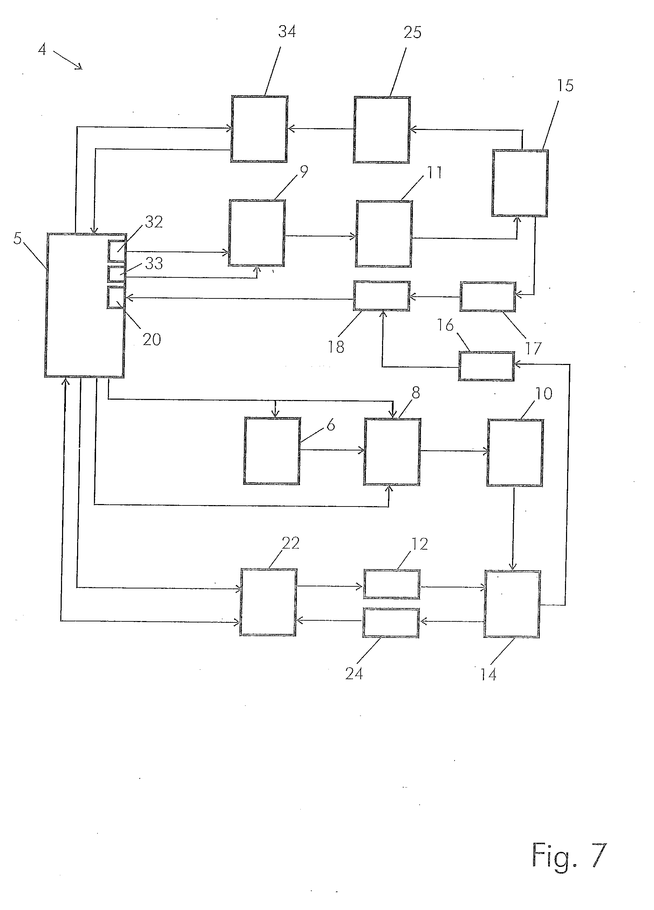

In Figur 7 ist eine schematische Darstellung des Verfahrens für den Einsatz in einer Lese-/Schreibvorrichtung 4 mit Frequenz von 125 kHz und 13,56 MHz des Detektions- und Kommunikationssignals dargestellt. Dabei ist es unerheblich, ob zunächst das Detektionssignal mit einer Frequenz von 125 kHz ausgesandt wird und anschließend das mit einer Frequenz von 13,56 MHz oder umgekehrt.

Zu Beginn eines Detektionszyklusses befindet sich die Lese-/Schreibvorrichtung 4 in einem Stand-by-Modus in dem lediglich die Teile einer Kontrolleinheit 5 aktiv sind, die für die periodische Verbringung der Lese-/Schreibvorrichtung 4 in einen Detektionsmodus benötigt werden.

Die periodische Verbringung in den Detektionsmodus der Lese-/Schreibvorrichtung 4 ist dabei individuell in der Kontrolleinheit 5 einstellbar. Eine vorteilhafte Ausgestaltung der Erfindung sieht einen Wechsel von Stand-by- in den Detektionsmodus alle 250 ms vor.

Im Detektionsmodus generiert die Kontrolleinheit 5 ein Detektionssignal in Form eines einzelnen 2 µs Pulses, der mittels eines Timer-Ausgangs 32 der Kontrolleinheit 5 über eine Verstärkereinheit 9 und eine Anpassung 11 an eine Antenne 15 geleitet wird. Der Puls regt die Antenne 15 zum Schwingen an, die daraufhin anschwingt und mit ihrer Resonanzfrequenz langsam wieder ausschwingt.

Das Antennensignal der Antenne 15 wird direkt abgegriffen und über einen Widerstand 17 einer Demodulationseinheit 18 zugeführt. Die Demodulationseinheit 18 beinhaltet einen Hüllkurvendemodulator, der eine Diode, einen Kondensator und einen parallel zum Kondensator liegenden Widerstand umfasst. Das Antennensignal der Antenne 15 wird im Hüllkurvendemodulator aufsummiert und kurzzeitig gespeichert.

Eine entsprechende Verarbeitung des gespeicherten Wertes beginnt erst dann, wenn das Detektionssignal bereits wieder abgeschaltet wurde. Somit wird das benötigte Energieniveau stets niedrig gehalten.

Das so gewonnene Vergleichssignal wird an einen A/D-Wandler 20 der Kontrolleinheit 5 weitergeleitet, in der das Vergleichssignal mit einem Referenzsignal verglichen wird. Sollte das Vergleichssignal außerhalb eines frei definierbaren Toleranzbereiches liegen, so wechselt die Kontrolleinheit 5 in einen Kommunikationsmodus. Im Kommunikationsmodus wird über die Verstärkereinheit 9 und die Anpassung 11 das Kommunikationssignal, welches über einen Timer-Ausgang 33 der Kontrolleinheit 5 in der Verstärkereinheit 9 modulierbar ist, an die Antenne 15 weitergeleitet, welche wiederum die Signale der Transpondereinheit empfängt und über einen Filter 25 an eine Empfängereinheit 34 leitet. Während der Kommunikation zwischen Kontrolleinheit 5 und Transpondereinheit werden, im für die Kommunikation benötigten Ausmaß, Daten von der Empfängereinheit 34 an die Kontrolleinheit 5 weitergeleitet.

Nach einer abgeschlossenen Kommunikation wird die Kontrolleinheit 5 wieder in den Stand-by-Modus verbracht, aus dem sie erneut periodisch in den Detektionsmodus verbracht wird.

Stimmt das Vergleichssignal bis auf eine definierbare Toleranzabweichung mit dem Referenzsignal überein, so befindet sich keine Transpondereinheit, die auf der 125 kHz Frequenz sendet, im elektromagnetischen Feld der Lese-/Schreibvorrichtung 4 und die Kontrolleinheit 5 schaltet zunächst einen Oszillator 6 und verzögert einen Verstärker 8 ein und leitet ein Detektionssignal mit einer Frequenz von 13,56 MHz über eine Anpassung 10 an eine Antenne 14.

Das Antennensignal der Antenne 14 wird direkt abgegriffen und über einen Widerstand 16 einer Demodulationseinheit 18 zugeführt. Die Demodulationseinheit 18 beinhaltet einen Hüllkurvendemodulator, der eine Diode, einen Kondensator und einen parallel zum Kondensator liegenden Widerstand umfasst. Das Antennensignal der Antenne 14 wird im Hüllkurvendemodulator aufsummiert und der Wert kurzzeitig gespeichert.

Eine entsprechende Verarbeitung des gespeicherten Wertes beginnt erst dann, wenn das Detektionssignal bereits wieder abgeschaltet wurde. Dadurch wird das benötigte Energieniveau stets niedrig gehalten.

Das so gewonnene Vergleichssignal wird an einen A/D-Wandler 20 der Kontrolleinheit 5 weitergeleitet, in der das Vergleichssignal mit einem Referenzsignal verglichen wird. Stimmt das Vergleichssignal bis auf eine definierbare Toleranzabweichung mit dem Referenzsignal überein, so befindet sich keine Transpondereinheit im elektromagnetischen Feld der Lese-/Schreibvorrichtung 2 und die Kontrolleinheit 5 wird in den Stand-by-Modus verbracht.

Sollte das Vergleichssignal jedoch außerhalb des Toleranzbereiches liegen, so wechselt die Kontrolleinheit 5 in einen Kommunikationsmodus, indem eine Transceivereinheit 22 eingeschaltet wird. Die Transceivereinheit 22 sendet daraufhin das Kommunikationssignal über eine Anpassung 12 an die Antenne 14, welche wiederum die Antwort der Transpondereinheit empfängt und über einen Filter 24 an die Transceivereinheit 22 leitet. Während der Kommunikation zwischen Kontrolleinheit 5 und Transpondereinheit werden, im für die Kommunikation benötigten Ausmaß, Daten zwischen Kontrolleinheit 5 und Transceivereinheit 22 ausgetauscht.

Nach einer abgeschlossenen Kommunikation wird die Transceivereinheit 22 abgeschaltet und die Kontrolleinheit 5 wieder in den Stand-by-Modus verbracht, aus dem sie erneut periodisch in den Detektionsmodus verbracht wird.

### Bezugszeichenliste

(ist Teil der Beschreibung)
- 2, 3, 4: Lese-/Schreibvorrichtung
- 5: Kontrolleinheit
- 6: Oszillator
- 8, 9: Verstärker
- 10, 11, 12: Anpassung
- 14, 15: Antenne
- 16, 17: Widerstand
- 18: Demodulationseinheit
- 20: A/D-Wandler
- 22: Transceivereinheit
- 24, 25: Filter
- 26, 27: Detektionssignal
- 28, 29: Antennensignal
- 30, 31: Antennenschwingung
- 32, 33: Timer-Ausgang
- 34: Empfängereinheit
- 36: Spannungskennlinie
- 38: Referenzsignal
- 40: Vergleichssignal
- 42: Toleranzbereich

## Patentansprüche

1. Verfahren zur Präsenzbestimmung einer Transpondereinheit in einem elektromagnetischen Feld einer Lese-/Schreibvorrichtung (2, 3, 4), umfassend die folgenden Verfahrensschritte:
• Verbringen einer Kontrolleinheit (5) aus einem Stand-by-Modus in einen Detektionsmodus
• Aussenden eines Detektionssignals
• Abgreifen eines Antwortsignals
• Weiterleiten des Antwortsignals an eine Demodulationseinheit (18)
• Ermitteln eines Vergleichssignals (40)
• Weiterleiten des Vergleichssignals (40) an die Kontrolleinheit (5)
• Vergleichen des Vergleichssignals (40) mit einem Referenzsignal (38)
• Aussenden eines Kommunikationssignals, falls das Vergleichssignal (40) um einen vorbestimmbaren Wert vom Referenzsignal (38) abweicht, sonst Rückkehr in den Stand-by-Modus,
**dadurch gekennzeichnet, dass** als Antwortsignal eine an einer Antenne der Lese-/Schreibvorrichtung (3, 4, 5) abgegriffene Spannung als Antennensignal (28, 29) gleichgerichtet und über mehrere Schwingungen (30, 31) analog aufsummiert und zwischengespeichert wird und nach Abschalten des Detektionssignals (26, 27) der zwischengespeicherte Wert als Vergleichssignal (40) an die Kontrolleinheit (5) weitergeleitet wird und dort mit dem Referenzsignal (38) verglichen wird.

2. Verfahren nach Anspruch 1, **dadurch gekennzeichnet, dass** das Verbringen der Kontrolleinheit (5) von dem Stand-by-Modus in den Detektionsmodus periodisch wiederholt wird, wobei die Periode einstellbar ist.

3. Verfahren nach einem der Ansprüche 1 oder 2, **dadurch gekennzeichnet, dass** ausgehend vom letzten Vergleichssignal (40), welches der Kontrolleinheit (5) übermittelt wurde, das Referenzsignal (38) automatisch neu kalibriert wird.

4. Verfahren nach einem der Ansprüche 1 bis 3, **dadurch gekennzeichnet, dass** das Vergleichssignal (40) mittels eines Hüllkurvendemodulators aufsummiert und kurzzeitig gespeichert wird, bevor es von der Kontrolleinheit (5) ausgewertet wird.

5. Verfahren nach einem der Ansprüche 1 bis 4, **dadurch gekennzeichnet, dass** die Kontrolleinheit (5) nach der Kommunikation mit der Transpondereinheit in den Stand-by-Modus verbracht wird.

6. Verfahren nach einem der Ansprüche 1 bis 5, **dadurch gekennzeichnet, dass** das Detektionssignal (27) als ein Impuls direkt über einen Timer-Ausgang (32) der Kontrolleinheit (5) erzeugt wird.

7. Verfahren nach Anspruch 6, **dadurch gekennzeichnet, dass** unmittelbar nach Aussenden des Impulses und für einen Zeitraum, der gleich dem Zeitraum zum Aufsummieren des Vergleichssignal (40) bis zu einem Maximalwert entspricht, die Kontrolleinheit (5) vorübergehend in den Stand-by-Modus versetzt wird und nach Ablauf dieses Zeitraums die Kontrolleinheit (5) wieder in den Detektionsmodus versetzt wird und der Wert des Vergleichssignals (40) verarbeitet wird.

8. Verfahren nach einem der Ansprüche 1 bis 7, **dadurch gekennzeichnet, dass** es sich bei dem Detektionssignal (26) um wenigstens einen Burst aus einer zeitlich begrenzten Folge von Schwingungen handelt.

9. Verfahren nach Anspruch 8, **dadurch gekennzeichnet, dass** zur Erzeugung des Detektionssignals (26) ein externer Oszillator (6) eingesetzt wird.

10. Verfahren nach einem der Ansprüche 8 oder 9, **dadurch gekennzeichnet, dass** das Detektionssignal (26) mit einer geringeren Leistung gesendet wird, als das Kommunikationssignal.

11. Verfahren nach einem der Ansprüche 8 bis 10, **dadurch gekennzeichnet, dass** zur Aussendung des Detektionssignals (26) ein hochohmiger Verstärker (8) eingesetzt wird.

12. Verfahren nach einem der Ansprüche 9 bis 11, **dadurch gekennzeichnet, dass** zu Beginn des Detektionsmodus der externe Oszillator (6) eingeschaltet wird, unmittelbar nach Einschalten des externen Oszillators (6) und für einen Zeitraum, der gleich dem Zeitraum zum Einschwingen und Erreichen eines stationären Zustand der Schwingungsamplitude ist, die Lese-/Schreibvorrichtung (2, 4) vorübergehend in den Stand-by-Modus versetzt wird und nach Ablauf dieses Zeitraums die Lese-/Schreibvorrichtung (2, 4) wieder in den Detektionsmodus versetzt wird, anschließend der Verstärker aktiviert und die Oszillatorschwingung für die Dauer des Bursts auf die Antenne (14) geschaltet und danach wieder von der Antenne (14) getrennt wird und der Verstärker (8) und der Oszillator (6) ausgeschaltet werden und unmittelbar danach der Wert des Vergleichssignals verarbeitet wird.

13. Verfahren nach einem der Ansprüche 1 bis 12, **dadurch gekennzeichnet, dass** bei einer kombiniert für den HF- und den LF-Frequenzbereich ausgelegten Lese-/Schreibvorrichtung (4) zunächst ein erstes Detektionssignal (26, 27) in einem der beiden Frequenzbereiche ausgesandt wird und dass nach dem Vergleich des Vergleichssignals (40) mit dem Referenzsignal (38) im einen Fall, dass das Vergleichssignal (40) um einen vorbestimmbaren Wert vom Referenzsignal (38) abweicht, die Kontrolleinheit (5) in den Kommunikationsmodus verbracht wird oder im anderen Fall, dass das Vergleichssignal (40) nicht um einen vorbestimmbaren Wert vom Referenzsignal (38) abweicht, ein zweites Detektionssignal (26, 27) in dem anderen der beiden Frequenzbereiche ausgesandt wird und dass nach dem weiteren Vergleich des Vergleichssignals (40) mit dem Referenzsignal (38) im einen Fall, dass das Vergleichssignal (40) um einen vorbestimmbaren Wert vom Referenzsignal (38) abweicht, die Kontrolleinheit (5) in den Kommunikationsmodus verbracht wird oder im anderen Fall, dass das Vergleichssignal (40) nicht um einen vorbestimmbaren Wert vom Referenzsignal (38) abweicht, in den Stand-by-Modus verbracht wird.

14. Lese-/Schreibvorrichtung zur Durchführung des Verfahrens nach einem der Ansprüche 1 bis 13, **dadurch gekennzeichnet, dass** die Demodulationseinheit (18) eine Diode, einen Kondensator und einen parallel zum Kondensator liegenden Widerstand umfasst, wobei der Kondensator ein Zwischenspeicher ist.

15. Lese-/Schreibvorrichtung nach Anspruch 14, **dadurch gekennzeichnet, dass** zwischen Antenne (14, 15) und Demodulationseinheit (18) ein Widerstand (16, 17) geschaltet ist.
